# EUROPÄISCHE PATENTSCHRIFT

(11) **EP 0 879 714 B1**
(45) Veröffentlichungstag und Bekanntmachung des Hinweises auf die Patenterteilung: **03.03.2004**
(21) Anmeldenummer: 98250163.7
(22) Anmeldetag: 13.05.1998
(51) Int. Cl.: B60B 3/04, B60B 23/00

(54) **Geschweisstes Fahrzeugrad**
Welded vehicle wheel
Roue de véhicule soudée

(30) Priorität: 23.05.1997 DE 19722851
(43) Veröffentlichungstag der Anmeldung: 25.11.1998
(73) Patentinhaber: Michelin Kronprinz Werke GmbH, 42697 Solingen (DE)
(72) Erfinder: Bönning, Meinhard, Dipl.-Ing., 42697 Solingen (DE); Duning, Ralf, Dipl.-Ing., 42719 Solingen (DE); Modricker, Klaus, Dr.-Ing., 58540 Meinerzhagen (DE)
(74) Vertreter: Meissner, Peter E., Dipl.-Ing.

(56) Entgegenhaltungen:
- DE-A- 4 313 989
- DE-A- 4 338 616
- US-A- 5 417 476
- PATENT ABSTRACTS OF JAPAN vol. 1996, no. 03, 29. März 1996 (1996-03-29) & JP 07 304301 A (NISSAN MOTOR CO LTD), 21. November 1995 (1995-11-21)
- PATENT ABSTRACTS OF JAPAN vol. 014, no. 305 (M-0992), 29. Juni 1990 (1990-06-29) & JP 02 099402 A (TOPY IND LTD), 11. April 1990 (1990-04-11)

## Beschreibung

Die Erfindung betrifft ein geschweißtes Fahrzeugrad mit einer Felge und einer Schüssel gemäß dem Oberbegriff des Patentanspruches 1.

Ein üblich geschweißtes Fahrzeugrad wird in der Weise hergestellt, daß mittels Preßsitz das äußere ringförmige Umfangsteil einer Schüssel mit einem inneren Bettbereich der Felge verbunden wird und daß die Stirnseite des äußeren ringförmigen Umfangteiles mittels einer Schweißnaht entlang des innenliegenden Bettbereiches der Felge verschweißt wird. Dabei kann je nach Anwendungsfall die Schweißnaht aus einer einzigen durchgehenden Schweißraupe bestehen oder mehrere Schweißraupenabschnitte aufweisen. Nachteilig dabei ist, daß beim Schweißen die an der Felge bzw. Schüssel von der vorherigen Kaltumformung noch anhaftenden Reste von Maschinenöl und / oder Reinigungsmitteln sehr rasch verdampfen, wodurch sich ein hoher Innendruck zwischen Schüssel und Felge aufbaut. Die gasförmigen Reaktionsprodukte können in den schmelzflüssigen Teil der Schweiße eindringen und dort nicht erwünschte Poren und / oder Gasblaseneinschlüsse bilden, die die Dauerfestigkeit der Schweißnaht mindern. Das zuvor geschilderte Problem kann man in der Weise vermeiden, daß man die zu verbindenden Teile, d. h. Felge und Schüssel vor Bildung der Preßsitzverbindung gründlich reinigt und trocknet. Nachteilig dabei ist, daß bei der Herstellung der Preßsitzverbindung hohe Reibkräfte entstehen, die zu einem unzulässigen metallischen Abrieb im Preßsitz führen. Eine Verringerung des Übermaßes im Sinne einer Reduzierung der Reibkräfte stellt auch keine befriedigende Lösung dar, da dadurch die Wirkung des Preßsitzes stark gemindert wird und die Schweißnaht dementsprechend stärker belastet wird. Dies kann im ungünstigsten Fall zum Bruch der Schweißnaht führen.

Zur Vermeidung der Entstehung von nicht erwünschten Poren und / oder Gasblaseneinschlüssen während des Verbindungsschweißens von Felge und Schüssel ist bereits vorgeschlagen worden, am äußeren Umfangsteil der Schüssel im Abstand voneinander angeordnete keilförmige Ausnehmungen vorzusehen (DE 43 38 616 A1). Durch diese Ausnehmungen können die beim Schweißen entstehenden gasförmigen Reaktionsprodukte entweichen. Nachteilig bei diesem Vorschlag ist, daß nur an diskret angeordneten Stellen eine Entweichmöglichkeit für die gasförmigen Reaktionsprodukte vorgesehen ist und die Herstellung der Ausnehmungen einen zusätzlichen Arbeitsgang erfordert.

Ein weiterer Lösungsvorschlag ist der Gattungsgemäßen US 5,417,476 zu entnehmen. Bei dieser Konstruktion werden im äußeren Umfangsteil der Schüssel über den Umfang sich erstreckende noppenartige Leisten eingeprägt, die auf der Innenseite der Felge zur Anlage kommen. Zwischen zwei aufeinanderfolgenden Leisten ist ein Abstand vorgesehen, der ähnlich wie die Ausnehmung zum Entweichen der gebildeten gasförmigen Reaktionsprodukte genutzt werden kann. Das mögliche Entweichen der gasförmigen Reaktionsprodukte wird aber behindert, da der stirnseitige Bereich des äußeren Umfangsteiles ebenfalls an der Innenseite der Felge zur Anlage kommt. Je nach Oberflächenbeschaffenheit und Preßdruck kann diese Anlage zu einem dichten metallischen Verschluß führen. Darüber hinaus ist diese Anordnung nachteilig, da diese Art der Anlage zu einem undefinierten Sitz zwischen Umfangsteil der Schüssel und Felge führt.

In der JP 07304301 A ist zum Ableiten der beim Schweißen entstehenden gasförmigen Reaktionsprodukte in der Felge und dem Umfangsteil der Schüssel jeweils eine Ringnut vorgesehen, wobei sich diese in axialer Richtung teilweise überschneiden, so daß zwischen der Anlegestelle bzw. der Schweißnaht und der Innenseite des Umfangsteils ein in Umfangsrichtung durchgehender Spalt entsteht und das Umfangsteil nur in einer axial schmalen Zone des außenliegenden Anfangsbereichs am Bettbereich der Felge in Form einer Preßsitzverbindung zur Anlage kommt.

Aufgabe der Erfindung ist es, ein geschweißtes Fahrzeugrad anzugeben, dessen Verbindung zwischen Felge und Schüssel so gestaltet ist, daß die Bildung von Poren und / oder Gasblaseneinschlüssen in der Schweißnaht vermieden und ein definierter Preßsitz zwischen Felge und Schüssel gebildet wird.

Diese Aufgabe wird ausgehend vom Oberbegriff durch die Merkmale im kennzeichnenden Teil des Patentanspruches 1 gelöst. Vorteilhafte Weiterbildungen sind Bestandteil von Unteransprüchen.

Der Kern der Erfindung ist darin zu sehen, daß im Unterschied zum bekannten Stand der Technik nur eine axial schmale Zone des außenliegenden Anfangsbereiches des Umfangsteiles am Bettbereich der Felge in Form eines Preßsitzes zur Anlage kommt. Da der im Verbindungsbereich liegende Bettbereich der Felge kegelig oder torusförmig ausgebildet ist und das Umfangsteil genau horizontal oder umgekehrt kegelig verläuft, wird zwischen der Anlagestelle und der Schweißnaht ein im Querschnitt sich verändernder Zwischenraum gebildet. Dieser Zwischenraum erstreckt sich über den ganzen Umfang, so daß die beim Schweißen entstehenden gasförmigen Reaktionsprodukte ungehindert entweichen können. Diese Anordnung hat den Vorteil, daß zur Bildung des Zwischenraumes kein gesonderter Arbeitsgang erforderlich ist. Von weiterem Vorteil ist, daß durch die vorgeschlagene Art des Preßsitzes ein definierter Sitzbereich auf einer kleinen umlaufenden Fläche und ein definierter Hebelarm zur Schweißnaht erzeugt wird. Die Krafteinleitung erfolgt hauptsächlich in diesem schmalen Sitzbereich und ist um einen bestimmten Abstand von der Schweißnaht entfernt. Die Schweißnaht dient zur Kraftübertragung und zur Fixierung der Schüssel in der Felge. Das Einziehen der Schüssel wird erleichtert, da die einzuziehenden Teile geschmiert werden können, ohne daß die Gefahr einer Porenund/oder Gasblaseneinschlußbildung besteht. Die Schmierung wiederum erlaubt es, das Übermaß groß zu wählen, so daß der Preßdruck entsprechend ansteigt und die Wirkung des Preßsitzes sich voll entfalten kann. Die schmalzonige definierte Anlage beträgt etwa 2 - 3 mm. Der Winkel α, der dem halben Kegelwinkel des Bettbereiches der Felge entspricht, und der Winkel β, der dem halben Kegelwinkel des kegelig ausgebildeten Umfangsteiles entspricht, liegen jeweils in einem Bereich kleiner 7 Grad.

Nachfolgend wird anhand einiger Ausführungsbeispiele das erfindungsgemäß ausgebildete Fahrzeugrad näher erläutert. Es zeigen:
- Figur 1: einen Ausschnitt eines Teillängsschnittes durch ein erfindungsgemäß ausgebildetes Fahrzeugrad und
- Fig. 2 - 6: Varianten von Figur 1

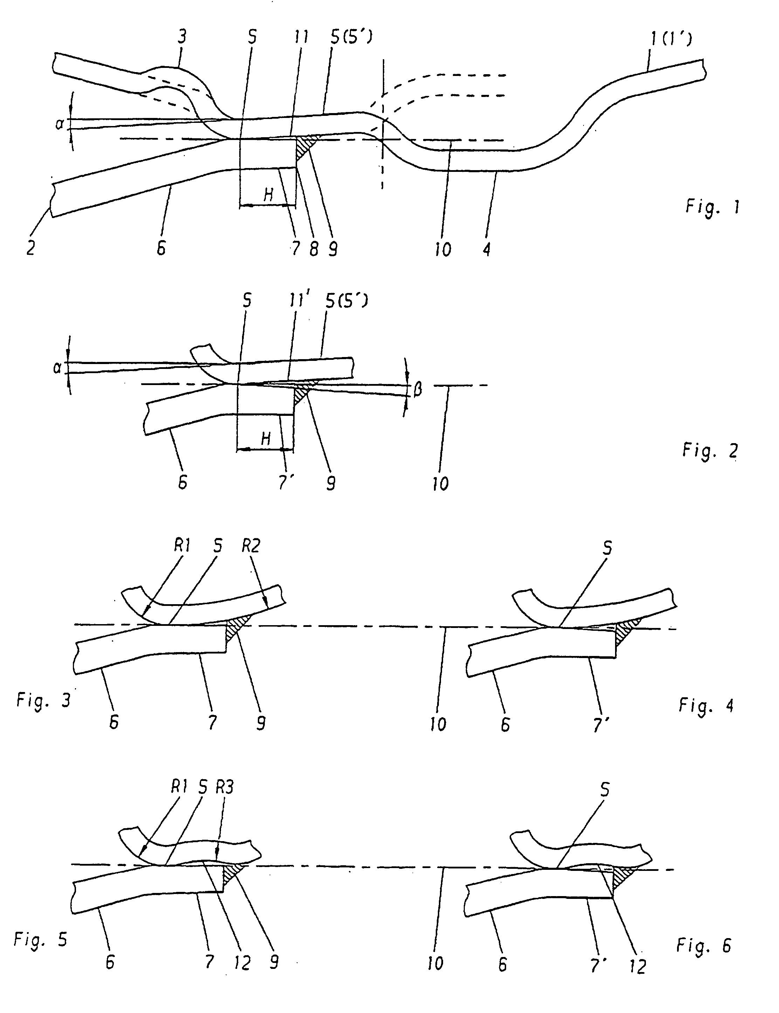

Figur 1 zeigt einen Ausschnitt eines Teillängsschnittes eines erfindungsgemäß ausgebildeten geschweißten Fahrzeugrades mit einer Felge 1 und einer Schüssel 2. In dem mit durchgezogenen Linien dargestellten Ausführungsbeispiel weist die Felge 1 einen Hump 3, ein Tiefbett 4 und einen Ledgebereich 5 auf. Mit gestrichelten Linien ist angedeutet, daß die Felge 1 ohne Hump ausgeführt sein kann. Weiterhin wird angedeutet, daß bei einer typischen Ausführung für PKW der Verbindungsbereich zwischen Felge 1 und Schlüssel 2 im Tiefbett 5' der PKW-Felge 1' liegt, während bei einer typischen Ausführung für den Nutzfahrzeugbereich die Verbindungsstelle im Ledgebereich 5 liegt. Erfindungsgemäß ist der Ledgebereich 5 bzw. der Tiefbettbereich 5' kegelig ausgebildet, wobei der sich im Durchmesser verjüngende Bereich auf der Außenseite des Fahrzeugrades liegt. Von der Schüssel 2 ist hier nur der im Durchmesser sich vergrößernde Seitenwandbereich 6 und das daran sich anschließende ringförmige Umfangsteil 7 dargestellt. Das Umfangsteil 7 verläuft im wesentlichen axial. Schüssel 2 und Felge 1 sind mittels einer an der Stirnseite 8 des Umfangsteiles 7 angeordneten Schweißnaht 9 miteinander verbunden. Erfindungsgemäß beschränkt sich der Preßsitz S nur auf eine schmale Zone im Bereich von 2 - 3 mm und liegt im Anfangsbereich des Umfangsteiles 7. Die strichpunktierte Linie 10 soll verdeutlichen, daß in diesem in Figur 1 dargestellten Ausführungsbeispiel das Umfangsteil 7 genau horizontal verläuft. Da aber der Ledgebereich 5 kegelig ausgebildet ist, bildet sich im Querschnitt gesehen ein keilförmiger Zwischenraum 11, der sich über den ganzen Umfang erstreckt. Wird nach dem Einpressen der Schüssel 2 in die Felge 1 die Schweißnaht 9 geschweißt, so können die gebildeten gasförmigen Reaktionsprodukte ungehindert nach beiden Seiten hin über den Zwischenraum entweichen. Erst beim Verbinden der Anfangsnaht mit der Endnaht wird der Raum geschlossen. Da aber dieser Bereich durch die zuerst aufgelegte Schweißraupe ausreichend erwärmt worden ist, kann davon ausgegangen werden, daß beim Annähern der Endnaht keine störenden gasförmigen Reaktionsprodukte mehr gebildet werden.

In den nachfolgenden Figuren 2 - 6 werden Varianten des erfindungsgemäß ausgebildeten geschweißten Fahrzeugrades gemäß Figur 1 dargestellt. Dabei wurden für gleiche Teile gleiche Bezugszeichen verwendet, wobei die Figuren 1, 2 sowie 3, 4 und 5, 6 paarweise zusammengehören.

Figur 2 unterscheidet sich von Figur 1 nur dadurch, daß das Umfangsteil 7' kegelig ausgebildet ist und der Winkel β, der dem halben Kegelwinkel entspricht, im Bereich kleiner 7 Grad liegt. Auf diese Weise wird der Zwischenraum 11' vergrößert.

Beim Ausführungsbeispiel gemäß den Figuren 3 und 4 ist der Ledgebereich 5 bzw. der Tiefbettbereich 5' torusförmig ausgebildet. Der im Bereich des Preßsitzes 7 liegende Teil des Bettbereiches weist einen Radius R1 und der daran anschließende Teil einen Radius R2 auf, wobei R2 gleich, kleiner oder größer als R1 sei kann.

Figur 4 unterscheidet sich, wie zuvor Figur 2, nur dadurch, daß das Umfangsteil 7' kegelig ausgebildet ist.

Eine weitere Variante zeigen die Figuren 5 und 6. In diesem Ausführungsbeispiel weist der Ledgebereich 5 bzw. der Tiefbettbereich 5' eine radial nach außen sich erstreckende Auswölbung 12 auf. Dabei kann der Radius R3 dieser konvex gebildeten Auswölbung 12 gleich, kleiner oder größer als der konkav gebildete Abschnitt mit dem Radius R1 sein.

Figur 6 unterscheidet sich von Figur 5 wieder dadurch, daß das Umfangsteil 7' kegelig ausgebildet ist.

## Patentansprüche

1. Geschweißtes Fahrzeugrad mit einer Felge (1,1') und einer Schüssel (2), die ausgehend vom Stirnflächenbereich einen im Durchmesser sich vergrößernden Seitenwandbereich und daran anschließend ein im wesentlichen axial sich erstreckendes ringförmiges Umfangsteil (7,7') aufweist, das mit einem nach außen hin im Durchmesser sich verringernden Bettbereich der Felge (1,1') innenseitig mittels einer Preßsitzverbindung (S) und mittels einer an der Stirnseite des Umfangsteiles angeordneten Schweißnaht (9) mit ihr verbunden ist,
wobei eine axial schmale Zone des außenliegenden Anfangsbereiches des Umfangsteiles (7, 7') am Bettbereich (5, 5') der Felge (1, 1') in Form der Preßsitzverbindung (S) zur Anlage kommt und zwischen der Anlagestelle (S) und der Schweißnaht (9) ein in Umfangsrichtung durchgehender axial sich im Querschnitt verändernder und über einen bestimmten Abstand (H) sich erstreckender Zwischenraum (11, 11') vorgesehen ist,
**dadurch gekennzeichnet,**
**dass** der Preßsitz einen Sitzbereich mit einer kleinen, durchgehenden umlaufenden Fläche aufweist.

2. Geschweißtes Fahrzeugrad nach Anspruch 1,
**dadurch gekennzeichnet,**
**dass** das Umfangsteil (7) genau horizontal verläuft.

3. Geschweißtes Fahrzeugrad nach Anspruch 1,
**dadurch gekennzeichnet,**
**dass** das Umfangsteil (7') kegelig ausgebildet ist, wobei der im Durchmesser sich verjüngende Umfangsteilbereich (7') auf der Innenseite des Fahrzeugrades liegt.

4. Geschweißtes Fahrzeugrad nach einem der Ansprüche 1 - 3,
**dadurch gekennzeichnet,**
**dass** der im Durchmesser sich verändernde Bettbereich (5, 5') der Felge (1, 1') in bekannter Weise kegelig ausgebildet ist und der Winkel α, der dem halben Kegelwinkel des Bettbereiches der Felge (1, 1') entspricht, kleiner 7 Grad ist.

5. Geschweißtes Fahrzeugrad nach den Ansprüchen 3 und 4,
**dadurch gekennzeichnet,**
**dass** der Winkel β, der dem halben Kegelwinkel des Umfangsteiles (7') entspricht, kleiner 7 Grad ist.

6. Geschweißtes Fahrzeugrad nach einem der Ansprüche 1 - 3,
**dadurch gekennzeichnet,**
**dass** der im Durchmesser sich verändernde Bettbereich der Felge (1, 1') torusähnlich ausgebildet ist, wobei der im Kontakt mit der Schüssel (2) sich befindende Bereich einen Radius (R1) aufweist, der entweder gleich oder verschieden ist zu dem Radius (R2) axial nach innen sich anschließenden Bereich.

7. Geschweißtes Fahrzeugrad nach einem der Ansprüche 1 - 3,
**dadurch gekennzeichnet,**
**dass** der im Durchmesser sich verändernde Bettbereich der Felge (1, 1') im Querschnitt gesehen eine radial nach außen sich erstreckende Auswölbung (12) aufweist, deren Radius entweder gleich oder verschieden ist als der Radius (R1) im Kontakt mit der Schüssel (2) sich befindende konkav ausgebildete Bereich.

8. Geschweißtes Fahrzeugrad nach einem der Ansprüche 1 - 7,
**dadurch gekennzeichnet,**
**dass** die axial schmale Zone der Preßsitzverbindung (S) eine axiale Erstreckung von 2 - 3 mm aufweist.

## Claims

1. Welded vehicle wheel with a rim (1, 1') and a centre (2) which, starting from the front face region, comprises a side wall region which increases in diameter and, adjoining the latter, an annular circumferential part (7, 7') which extends substantially axially and is joined to a base region of the rim (1, 1') which decreases outwards in diameter on the inside by means of a press fit joint (S) and by means of a weld seam (9) disposed at the front side of the circumferential part,
wherein an axially narrow zone of the outer initial region of the circumferential part (7, 7') comes into contact with the base region (5, 5') of the rim (1, 1') in the form of the press fit joint (S), and an interspace (11, 11'), which is continuous in the circumferential direction, changes axially in cross section and extends over a certain distance (H), is provided between the contact point (S) and the weld seam (9),
**characterised in**
**that** the press fit comprises a fit region with a small, continuous, circulating face.

2. Welded vehicle wheel according to Claim 1,
**characterised in**
**that** the circumferential part (7) extends exactly horizontally.

3. Welded vehicle wheel according to Claim 1,
**characterised in**
**that** the circumferential part (7') is conical, wherein the circumferential part region (7') which tapers in diameter lies on the inside of the vehicle wheel.

4. Welded vehicle wheel according to any one of Claims 1 - 3,
**characterised in**
**that** the base region (5, 5'), which changes in diameter, of the rim (1, 1') is formed in a conical known manner and the angle α, which corresponds to half the cone angle of the base region of the rim (1, 1'), is less than 7 degrees.

5. Welded vehicle wheel according to Claims 3 and 4,
**characterised in**
**that** the angle β, which corresponds to half the cone angle of the circumferential part (7'), is less than 7 degrees.

6. Welded vehicle wheel according to any one of Claims 1 - 3,
**characterised in that** the base region, which changes in diameter, of the rim (1, 1') is formed like a torus, wherein the region which is in contact with the centre (2) has a radius (R1) which is either equal to or different from the radius (R2) of the region adjoining axially inwards.

7. Welded vehicle wheel according to any one of Claims 1 - 3,
**characterised in**
**that**, viewed in cross section, the base region, which changes in diameter, of the rim (1, 1') comprises an arch (12) which extends radially outwards and the radius of which is either equal to or different from the radius (R1) of the concave region which is in contact with the centre (2).

8. Welded vehicle wheel according to any one of Claims 1 - 7,
**characterised in**
**that** the axially narrow zone of the press fit joint (S) has an axial extent of 2 - 3 mm.

## Revendications

1. Roue de véhicule soudée comportant une jante (1, 1') et un flanc (2), qui présente une zone de paroi latérale à diamètre croissant à partir de la zone de surface frontale et, à la suite, une partie périphérique annulaire (7, 7') sensiblement axiale, qui est reliée intérieurement au moyen d'une liaison à ajustage serré (S) à une zone de la base de la jante (1, 1') à diamètre décroissant vers l'extérieur et qui est reliée à ladite base au moyen d'un cordon de soudure (9) agencé à la face frontale de ladite partie périphérique, une étroite zone axiale du bord extérieur de la partie périphérique (7, 7') étant en appui sur la base (5, 5') de la jante (1, 1') par la liaison à ajustage serré (S) et, entre la position d'appui (S) et le cordon de soudure (9), étant prévu un espace intermédiaire (11, 11') à section axialement variable en direction de la périphérie s'étendant sur une longueur déterminée (H),
**caractérisée en ce que** l'ajustage serré présente une petite surface d'appui annulaire continue.

2. Roue de véhicule soudée selon la revendication 1,
**caractérisée en ce que** la partie périphérique (7) est sensiblement horizontale.

3. Roue de véhicule soudée selon la revendication 1,
**caractérisée en ce que** la partie périphérique (7') est conique, son diamètre se réduisant du côté intérieur de ladite roue.

4. Roue de véhicule soudée selon l'une des revendications 1 à 3,
**caractérisée en ce que** la partie de la base (5, 5') de la jante (1, 1') à diamètre variable est conformée en cône de façon connue et l'angle α, qui correspond au demi-angle du cône de ladite partie de base de la jante (1, 1'), est inférieur à 7 degrés.

5. Roue de véhicule soudée selon les revendications 3 et 4,
**caractérisée en ce que** l'angle β, qui correspond au demi-angle du cône de la partie périphérique (7'), est inférieur à 7 degrés.

6. Roue de véhicule soudée selon l'une des revendications 1 à 3,
**caractérisée en ce que** la partie de la base de la jante (1, 1') à diamètre variable présente une forme toroïdale, la partie se trouvant au contact de la coque (2) présentant un rayon (R1) qui est égal ou différent du rayon (R2) de la partie axiale, adjacente vers l'intérieur.

7. Roue de véhicule soudée selon l'une des revendications 1 à 3,
**caractérisée en ce que** la partie de la base de la jante (1, 1') présente, en coupe, un bombement (12) s'étendant radialement vers l'extérieur, dont le rayon est égal ou différent du rayon (R1) de la partie concave se trouvant au contact du flanc (2).

8. Roue de véhicule soudée selon l'une quelconque des revendications 1 à 7,
**caractérisée en ce que** la zone axialement étroite de l'ajustage serré (S) s'étend axialement sur 2 à 3 mm.
